(19) Europäisches Patentamt
European Patent Office
Office européen des brevets

(11) **EP 3 149 655 B1**

(12) **FASCICULE DE BREVET EUROPEEN**

(45) Date de publication et mention
de la délivrance du brevet:
**06.04.2022 Bulletin 2022/14**

(21) Numéro de dépôt: **15726147.0**

(22) Date de dépôt: **02.06.2015**

(51) Classification Internationale des Brevets (IPC):
***G06K 9/00*** *(2022.01)*

(52) Classification Coopérative des Brevets (CPC):
**G06V 40/1394**

(86) Numéro de dépôt international:
**PCT/EP2015/062195**

(87) Numéro de publication internationale:
**WO 2015/185522 (10.12.2015 Gazette 2015/49)**

(54) **PROCEDE DE VALIDATION DE L'AUTHENTICITE D'UN ELEMENT DU CORPS HUMAIN**

VERFAHREN ZUR ÜBERPRÜFUNG DER AUTHENTIZITÄT EINES ELEMENTS DES MENSCHLICHEN KÖRPERS

METHOD FOR VALIDATING THE AUTHENTICITY OF AN ELEMENT OF THE HUMAN BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2014 FR 1454984**

(43) Date de publication de la demande:
**05.04.2017 Bulletin 2017/14**

(73) Titulaire: **Idemia Identity & Security France
92400 Courbevoie (FR)**

(72) Inventeurs:
• **PICARD, Sylvaine
92800 Puteaux (FR)**
• **KETCHANTANG, William
92130 Issy les Moulineaux (FR)**

(74) Mandataire: **Chauvin, Karen Laurence
Idemia
2, place Samuel de Champlain
92400 Courbevoie (FR)**

(56) Documents cités:
**EP-A2- 2 192 526       WO-A1-2011/047235
JP-A- 2001 510 579       US-A1- 2005 205 667
US-A1- 2008 025 579       US-A1- 2010 148 068
US-B1- 6 292 576**

## Description

La présente invention se rapporte à un procédé pour la validation de ce qu'un objet est un élément du corps humain ainsi qu'à un dispositif de validation configuré pour mettre en œuvre un tel procédé et un procédé de calibration d'un tel dispositif de validation.

L'authentification par empreintes digitales ou par le réseau veineux est une des techniques utilisées pour l'authentification biométrique. Une image d'un doigt illuminé est acquise et analysée pour identifier un individu. Cependant, il est possible d'utiliser des leurres, des faux doigts reproduisant les caractéristiques sur la base desquelles se fondent l'analyse de l'image, comme par exemple des empreintes digitales ou le réseau veineux du doigt.

Dans le cas d'une identification basée sur la reconnaissance du réseau veineux, l'acquisition des images de veines d'un doigt s'effectue au moyen d'un éclairage infrarouge et d'une caméra sensible à l'infrarouge. En effet, les veines du doigt absorbent plus l'éclairage infrarouge que les autres tissus sous-cutanés. Dans ce cas, un leurre présenté au capteur d'acquisition de veine pour tromper le dispositif d'acquisition nécessite seulement de présenter les bonnes propriétés d'absorption dans l'infrarouge.

Il est donc nécessaire de prévoir en sus un procédé de validation pour valider de ce que l'objet analysé est bien un élément du corps humain, le plus souvent un doigt, mais il peut s'agir de la main dans son ensemble, ou d'une autre partie du corps.

Différents procédés de validation ont été proposés, faisant en général appel à diverses propriétés d'un doigt vivant plus ou moins difficiles à reproduire. Parmi ces solutions, certaines visent à mettre en évidence l'apparition et la disparition des réseaux veineux en fonction de la pression exercée par le doigt. Par exemple, la demande US2011/0129128 A1 décrit l'utilisation de capteurs de pression utilisés pour détecter une disparition de veine après avoir un fort appui.

D'autres solutions visent à localiser les veines par un système interférométrique. Par exemple, la demande EP 2328111 A1 utilise un système d'interférométrie optique pour analyser l'onde lumineuse incidente, et l'onde diffusée par les tissus sous-cutanés, afin d'en déduire la profondeur des veines et la différence de fréquence entre les deux ondes caractéristique du milieu cutané.

Cependant, outre l'efficacité variable de ces procédés, ceux-ci nécessitent généralement des dispositifs complexes, coûteux et encombrants. De plus, ils requièrent parfois une utilisation spécifique, comme par exemple une certaine pression du doigt, et la qualité de l'authentification dépend alors également du comportement de l'utilisateur. Enfin, ces solutions sont souvent difficiles à mettre en place dans les systèmes existants.

Des documents telles que la demande US 2005/205667 A1 prévoit, pour chacune d'une pluralité de longueurs d'onde, d'illuminer la peau d'un doigt et d'acquérir une image du doigt éclairé à cette longueur d'onde. Les images ainsi acquises sont individuellement comparées à des caractéristiques attendues d'un doigt authentique pour cette longueur d'onde. L'utilisation de plusieurs images avec chacune un éclairage à une longueur d'onde particulière permet de mettre en évidence des caractéristiques du comportement d'un doigt authentique propre à chaque longueur d'onde. Il s'agit de déterminer un profil spectral et de le comparer avec le profil spectral attendu pour un doigt authentique. Or, le comportement d'un doigt authentique peut varier en fonction en fonction du doigt (peau fine ou épaisse, etc.), et des conditions d'acquisition des images (peau sèche ou humide, propreté, etc.). Il en résulte que la marge de tolérance sur les écarts par rapport au comportement attendu doit être grande, réduisant ainsi l'efficacité de la détection des fraudes.

## PRESENTATION DE L'INVENTION

L'invention a pour but de remédier au moins en partie à ces inconvénients et préférentiellement à tous, et vise notamment à proposer un procédé de validation sans inconvénients pour l'utilisateur, simple à mettre en œuvre, et ne nécessitant pas de dispositif complexe.

A cet effet, il est proposé un procédé pour la validation de ce qu'un objet est un élément du corps humain comme indiqué dans la revendication 1.

L'invention concerne également un produit programme d'ordinateur selon la revendication 14.

L'invention concerne également un dispositif de validation configuré pour mettre en œuvre un procédé de validation selon l'invention, ledit dispositif de validation défini par la revendication 12.

L'invention concerne également un procédé de calibrage d'un dispositif de validation selon l'invention, défini par la revendication 13.

## PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:

- la figure 1 est un schéma illustrant un dispositif de validation selon un mode de réalisation possible de l'invention,
- la figure 2 est un schéma de principe illustrant des étapes du procédé de validation selon un mode de réalisation possible de l'invention,
- la figure 3 est un schéma de principe illustrant des étapes du procédé de calibration selon un mode de réalisation possible de l'invention ;
- la figure 4 est un exemple de distribution spatiale de l'intensité lumineuse de la seconde source lumineuse qui a été quantifiée selon 4 niveaux de poids.

DESCRIPTION DETAILLEE

Dans la description qui suit, l'élément du corps humain en question est un doigt, et l'objet est donc soit un doigt authentique, soit une fraude imitant un doigt, ce qui correspond à une application typique de l'invention.

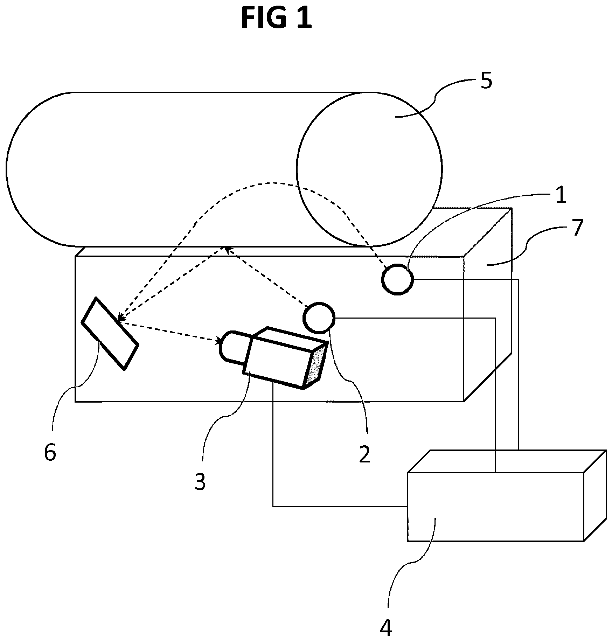

En référence à la figure 1, un dispositif de validation selon un mode de réalisation de l'invention comporte au moins une première source lumineuse 1 émettant en direction du doigt 5 de la lumière dans une première plage de longueurs d'onde, et au moins une seconde source lumineuse 2 émettant en direction du doigt 5 de la lumière dans une seconde plage de longueurs d'onde dont les longueurs d'onde sont inférieures à celles de la première plage. La seconde source lumineuse émet donc de la lumière à des longueurs d'onde inférieures à celles de la première source lumineuse.

La première et la seconde source lumineuse 2 peuvent être constituées d'une ou plusieurs diodes électroluminescentes ou autres source de lumière, et sont regroupées par la longueur d'onde de leur éclairage. Dans l'exemple illustré, un support 7, par exemple un prisme, transparent, est utilisé pour que le doigt repose dessus.

La première plage de longueurs d'onde est de préférence dans l'infrarouge, tandis que la seconde plage de longueurs d'onde correspond à un spectre visible. La première plage de longueur d'onde correspond de préférence à l'infra-rouge proche, soit 700 nm à 900 nm, tandis que la seconde plage de longueurs d'onde peut aller de 400 nm à 700 nm. La première source lumineuse 1 émet de la lumière dans l'infrarouge de sorte à ce que la lumière émise par ladite première source lumineuse 1 soit majoritairement diffusée dans un élément du corps humain authentique. La seconde source lumineuse 2 émet de la lumière dans le spectre visible de sorte que la lumière émise par ladite seconde source lumineuse 2 soit majoritairement réfléchie par un élément du corps humain authentique. De préférence, les longueurs d'onde de la première source lumineuse 1 et celles de la seconde source lumineuse 2 sont espacées d'au moins 200 nm. Par exemple, la première plage de longueurs d'onde est comprise entre 780 nm et 900 nm, et la seconde plage de longueurs d'onde est comprise entre 435 nm et 550 nm.

Il est possible de prévoir une deuxième seconde source lumineuse 2, avec des longueurs d'onde correspondant à une couleur autre que la première seconde source lumineuse 2, mais toujours dans le spectre visible. Par exemple, il est possible de prévoir une seconde source lumineuse 2 émettant dans le bleu, c'est-à-dire entre 435 et 500 nm, tandis qu'une autre seconde source lumineuse 2 émet dans le vert, c'est-à-dire de 500 à 550 nm. La description qui suit sera faite dans le cas d'une seule seconde source lumineuse 2 émettant dans le vert pour des raisons de simplicité.

Le dispositif de validation comprend également un capteur d'image 3 sensible à une gamme de longueur d'onde recouvrant au moins en partie la première plage de longueurs d'onde et la seconde plage de longueur d'onde, configurée pour acquérir une image de l'objet présenté au dispositif, typiquement un doigt. Le capteur d'image 3 est capteur photographique, composant électronique photosensible servant à convertir un rayonnement électromagnétique en un signal électrique analogique. Par exemple, il s'agit d'un capteur CCD couleur ou similaire. Un miroir 6 peut être prévu pour renvoyer la lumière en direction du capteur d'image 3.

Un tel capteur couleur enregistre une image de l'objet avec, pour chaque pixel, des valeurs associées à des composantes de couleur. Typiquement, ces composantes de couleur sont le rouge, le vert et le bleu, d'où l'appellation courante de RVB (ou RGB en anglais). Ainsi, à chaque pixel x de l'image sont associés trois valeurs $(x_r, x_v, x_b)$ caractéristiques de l'intensité lumineuse dans la composante, respectivement, rouge, verte et bleue.

Une matrice de filtres de couleur couramment utilisée est le filtre de Bayer, matrice composée de filtres de couleur rouge, verte et bleue, placé devant le capteur photographique qui enregistre alors les intensités lumineuses derrière chacun des filtres de la matrice, permettant d'associer une valeur à une composante colorée. Dans l'exemple des images 24 bits qui sera utilisé ici, les trois composantes sont chacune codées sur 8 bits et donc leur valeur s'étend de 0 à 255. D'autres formats peuvent être utilisés, tant en couleur que dans le codage des valeurs.

La première source lumineuse 1 est configurée pour que la lumière émise par ladite première source lumineuse 1 et atteignant le capteur d'image en provenance de 1 ait suffisamment pénétré un éventuel doigt 5 pour contenir un signal significatif en provenance des veines dudit doigt. En d'autres termes, l'éclairage de l'objet par la première source lumineuse 1 est configuré pour faire apparaître le réseau veineux à l'intérieur d'un élément du corps humain authentique dans l'image acquise par le capteur d'image 3.

A cet effet, la première source lumineuse 1 peut être disposée de sorte de ne pas éclairer la surface de l'objet imagée acquise par le capteur d'image 3. Par exemple, lorsque le capteur d'image 3 est situé sous l'objet, la première source lumineuse 1 éclaire le côté ou le dessus de l'objet. Il est également possible que la première source lumineuse 1 éclaire l'objet du même côté que la surface imagée, mais en dehors du champ d'acquisition du capteur d'image 3. Plus généralement, on configure la première source lumineuse 1 pour que la lumière émise par celle-ci soit incidente à l'objet hors du champ d'acquisition du capteur d'image 3, c'est-à-dire que la première source lumineuse 1 n'éclaire pas la surface imagée de l'objet.

La seconde source lumineuse 2 est configurée pour que la lumière émise par celle-ci soit incidente à l'objet dans le champ d'acquisition du capteur d'image 3, c'est-à-dire que la seconde source lumineuse 2 éclaire la surface imagée de l'objet qui est acquise par le capteur d'image 3.

On peut également utiliser un premier polariseur disposé sur le trajet lumineux entre la première source lumineuse 1 et l'objet, ledit premier polarisateur étant un polariseur rectiligne avec un axe de polarisation dans une première direction, et un second polariseur rectiligne au niveau du capteur d'image 3, avec un axe de polarisation dans une seconde direction orthogonale à la première direction. La lumière captée par le capteur d'image 3 est ainsi polarisée par le second polarisateur. L'orthogonalité des directions des axes de polarisation permet d'éviter que de la lumière émise par la première source lumineuse 1 réfléchie par l'objet sans avoir été diffusée dans celui-ci ne soit captée par le capteur d'image 3. A l'inverse, il n'y a pas de polarisateur rectiligne avec un axe de polarisation dans la première direction sur le trajet lumineux entre la seconde source lumineuse 2 et l'objet : la lumière émise par la seconde source lumineuse 2 n'est pas polarisée dans la première direction. De préférence, il n'y a pas de polariseur sur le trajet lumineux entre la seconde source lumineuse 2 et l'objet : la lumière émise par la seconde source lumineuse 2 n'est pas polarisée.

Le dispositif de validation comprend encore une unité de traitement 4 configurée pour mettre en œuvre un traitement de validation fonction de comparaisons entre les valeurs de la seconde composante des pixels et les valeurs de la première composante des pixels dans une zone d'intérêt de l'image, afin de permettre de valider que l'objet correspond à un élément du corps humain, en l'occurrence le doigt 5. Cette unité de traitement 4 est typiquement un ordinateur muni d'un processeur et d'une mémoire.

Contrairement à beaucoup de matériaux, les tissus sous-cutanés d'un doigt ont des caractéristiques telles qu'ils diffusent plus la lumière infrarouge, qu'ils ne réfléchissent la lumière de longueur d'onde plus faible, comme le vert ou le bleu, contrairement à beaucoup de faux doigts. Il est donc proposé d'exploiter ce phénomène pour caractériser les doigts vivants afin de les distinguer des fraudes.

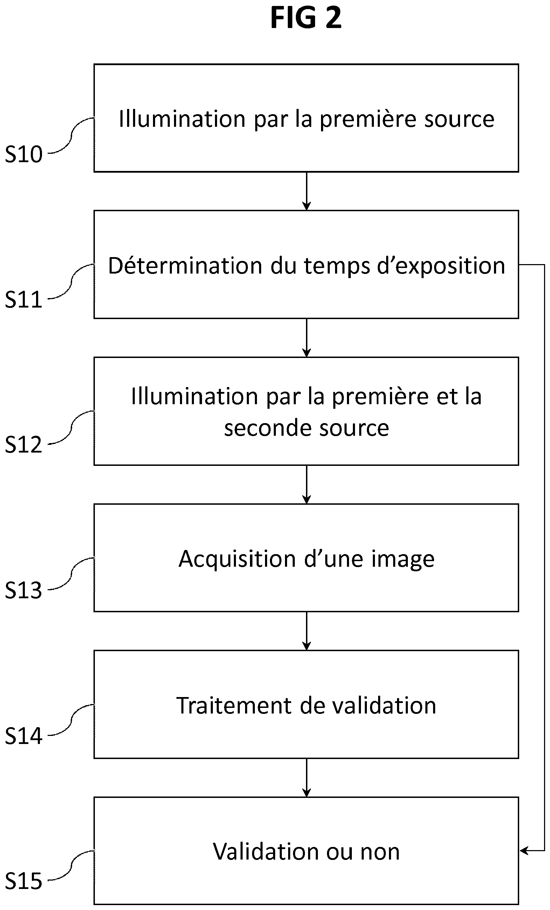

En référence à la figure 2, le procédé de validation comprend une étape S12 au cours de laquelle l'objet est illuminé par la première source lumineuse 1 et par la seconde source lumineuse 2 pendant un temps d'exposition.

Le temps d'exposition est préalablement déterminé par une étape S11 au cours de laquelle le doigt est illuminé seulement par la première source lumineuse S1). Le temps d'exposition correspond au temps nécessaire pour que le niveau moyen d'exposition à la lumière du capteur d'image atteigne une valeur prédéterminée. Par exemple, dans le cas de valeurs sur 8 bits, la valeur moyenne prédéterminée est un niveau de gris moyen de 128. En fonction des personnes, la diffusion de la lumière infrarouge dans le doigt varie, notamment en fonction de l'épaisseur de la peau, et donc le temps d'exposition de la caméra à l'éclairage infrarouge varie également selon les doigts. Cette détermination du temps d'exposition présente l'avantage de permettre d'adapter la durée d'illumination ultérieure à l'épaisseur de la peau du doigt, ainsi il est possible indépendamment de l'épaisseur des doigts de révéler le réseau veineux à l'intérieur du doigt, constitué de l'hémoglobine désoxygéné absorbant l'éclairage infrarouge utilisé.

En outre, ce temps d'exposition peut être utilisé pour valider ou non l'authenticité du doigt, puisqu'un leurre nécessite généralement un temps d'exposition sensiblement différent de celui nécessaire à un doigt humain. Un temps d'exposition s'écartant trop d'une plage d'acceptabilité signifie alors que l'objet présenté n'est pas un doigt authentique.

Alternativement, la puissance de la première source lumineuse peut être préalablement déterminé par une étape au cours de laquelle l'objet 5 est illuminé seulement par la première source lumineuse 1 pendant un temps d'exposition déterminé, ladite puissance correspondant à la puissance nécessaire pour que le niveau moyen d'exposition du capteur d'image à la lumière atteigne une valeur prédéterminée. Le traitement de validation peut également être fonction de la puissance de la première source lumineuse ainsi déterminée, de façon similaire au temps d'exposition.

Les puissances lumineuses d'illumination respectives de la première source lumineuse 1 et de la seconde source lumineuse 2 sont calibrées pour que la première composante de couleur et la seconde composante de couleur soient statistiquement équilibrées pour un élément du corps humain authentique ;

Le capteur d'image 3 acquiert ensuite (étape S13) une image de l'objet illuminé. Il s'agit d'une image en couleur, les pixels de ladite image étant associés à au moins deux valeurs caractéristiques respectivement d'une première composante de couleur et d'une seconde composante de couleur, ladite seconde composante correspondant à au moins une longueur d'onde de la seconde plage de longueurs d'onde. Dans l'exemple qui suit, la première composante de couleur est le rouge, tandis que la seconde composante de couleur est le vert. Comme indiqué précédemment, les composantes d'une image de couleur sont typiquement le rouge, le vert et le bleu, et la seconde composante pourrait également être du bleu.

Un traitement de validation est mis en œuvre sur cette image (étape S14). Ce traitement de validation est fonction de comparaisons entre les valeurs de la seconde composante des pixels d'une zone d'intérêt de l'image et les valeurs de la première composante desdits pixels.

Plus précisément, le traitement de validation comprend le calcul d'un paramètre de réflexion $\beta$ qui est fonction de la somme des valeurs de la seconde composante des pixels de la zone d'intérêt dont la première composante est inférieure d'une valeur prédéterminée à la valeur de la seconde composante. De préférence, cette somme est pondérée par l'inverse d'un poids prédéterminé fonction d'une distribution de l'intensité lumineuse de la seconde source lumineuse.

Une formulation possible pour la détermination du paramètre de réflexion β est la suivante :

$$\beta = \frac{1}{N_{ROI}} \sum_{x \in ROI} \frac{x_v . H(x_v - (x_r + \varepsilon))}{\omega_x}$$

avec H la fonction de Heaviside, $N_{ROI}$ le nombre total de pixels x de la zone d'intérêt ROI, $x_r$ la valeur de la première composante du pixel x, $x_v$ la valeur de la seconde composante du pixel x, $\varepsilon$ une constante de seuil, et $\omega_x$ la valeur du poids prédéterminé lié à la distribution spatiale de l'intensité lumineuse de la seconde source lumineuse 2 pour le pixel x.

La constante de seuil $\varepsilon$ est choisie de sorte à avoir un résultat moins sensible au bruit, et est par exemple d'au moins 5 dans une plage de valeurs 0-255 (codage 8 bits). Dans l'exemple, la première composante de couleur est le rouge, d'où l'indice r, et la seconde composante est le vert, d'où l'indice v.

Lorsque la seconde composante d'un pixel, i.e. $x_v$, n'est pas prise en compte par le paramètre de réflexion β, cela signifie que celle-ci n'est pas prépondérante par rapport à sa première composante, i.e. $x_r$. Par conséquent, cela indique que la diffusion de la lumière issue de la première source lumineuse 1 est prépondérante par rapport à la réflexion de la lumière issue de la seconde source lumineuse 2. Au contraire, lorsque la seconde composante d'un pixel, i.e. $x_v$, est prise en compte par le paramètre de réflexion β, cela signifie que celle-ci est prépondérante par rapport à sa première composante, i.e. $x_r$. Par conséquent, cela indique que la réflexion de la lumière issue de la seconde source lumineuse 2 est prépondérante par rapport à la diffusion de la lumière issue de la première source lumineuse 1.

Lorsque la puissance de la seconde source lumineuse 2 est correctement calibrée par rapport à la puissance de la première source lumineuse 1, avec un temps d'exposition adéquat, un doigt réel présente généralement un phénomène de diffusion de la lumière émise par la première source lumineuse 1 qui est prépondérant, c'est-à-dire un paramètre de réflexion β faible. Au contraire, un leurre présente généralement un phénomène de réflexion de la lumière émise par la seconde source lumineuse 2 qui est prépondérant, c'est-à-dire un paramètre de réflexion β élevé.

Par conséquent, en fonction de la valeur prise par le paramètre de réflexion β, il est possible de valider ou non l'authenticité du doigt. Par exemple, un seuil d'acceptabilité peut être déterminé pour le paramètre de réflexion β, par exemple à partir d'une base d'apprentissage de vrais doigts et de leurres, au-delà duquel le doigt est considéré comme n'étant pas authentique, et en deçà duquel le doigt est considéré comme authentique.

Ce traitement de validation peut également prendre en compte le temps d'exposition, comme indiqué précédemment, pour valider ou non l'authenticité. On a alors une mesure consolidée constituée du couple paramètre de réflexion - temps d'exposition, qui permet de mieux encore discriminer les leurres des doigts réels.

Dans la formule du paramètre de réflexion β, on constate une pondération par le niveau d'éclairage du pixel par la seconde composante en l'absence de l'objet. Comme indiqué précédemment, cette distribution spatiale de l'intensité lumineuse de la seconde source lumineuse 2 quantifiée en plusieurs niveaux de poids est prédéterminée. Il s'agit de fait d'une caractéristique du dispositif de validation utilisé. De fait, l'éclairage de l'objet par la seconde source lumineuse n'est pas uniforme, et la détermination de la distribution spatiale de l'intensité lumineuse de la seconde source lumineuse 2 permet de mettre en œuvre le terme correctif $\omega_x$ afin de compenser ce manque d'homogénéité.

Pour déterminer cette distribution spatiale de l'intensité lumineuse de la seconde source lumineuse 2, une mire blanche correspondant à un papier blanc est posée sur la surface du support 7, et est illuminée par la seconde source lumineuse 2 seule. Le capteur d'image 3 acquiert une image de cette mire illuminée, sous une forme représentative de l'intensité de l'illumination par la seconde source lumineuse 2, comme par exemple une image en niveau de gris de la seconde composante de couleur, comme le vert.

Cette image est partitionnée en plusieurs zones par seuillage des niveaux de gris, chacune des zones étant associée à une valeur prise par les pixels de ladite zone. Cette valeur correspond au poids de l'intensité de l'éclairage de la seconde source lumineuse dans ladite zone. Cependant, il est préférable d'avoir les rapports entre les poids de l'intensité de l'éclairage de la seconde source lumineuse desdites zones qui correspondent aux rapports des intensités moyennes des pixels dans lesdites zones. Et ceci pour rester fidèle à la distribution spatiale de l'intensité lumineuse de la seconde source lumineuse. Par exemple, quatre zones peuvent être définies, correspondant respectivement à des zones de poids d'éclairage de la seconde source lumineuse de valeur 100, 50, 25 et 12.

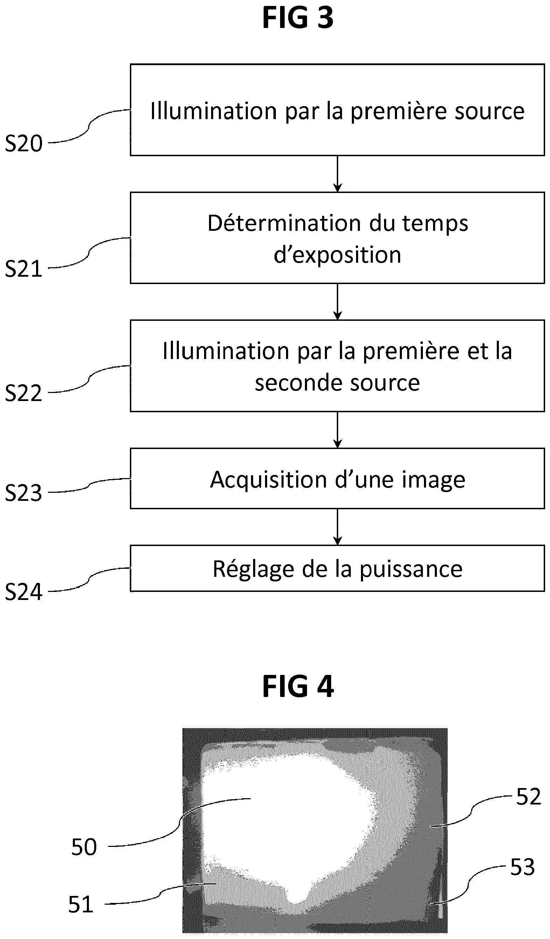

La figure 4 illustre un exemple d'une telle image, avec

- une première zone 50 correspondant à la zone où l'intensité de la seconde source d'éclairage est la plus importante. , Ainsi, tous les pixels x dans ladite zone auront tous un poids $\omega_x$ =100, liée à l'intensité maximale de la seconde source d'éclaiarge.

- une seconde zone 51 correspondant à une zone d'intensité moins forte (intensité réduite d'un facteur 2 par rapport à la zone 50), e.g. , Ainsi, tous les pixels x dans ladite zone auront tous un poids $\omega_x$ =50.

- une troisième zone 52 correspondant à une zone d'intensité encore moins forte (intensité réduite d'un facteur 2 par rapport à la zone 51), e.g., Ainsi, tous les pixels dans la dite zone auront un poids $\omega_x = 25$.
- une quatrième zone 53 correspondant à une zone d'intensité plus faible (intensité réduite d'un facteur 2 par rapport à la zone 52), e.g.. Ainsi, tous les pixels dans ladite zone auront un poids $\omega_x = 12$.

Bien entendu, les valeurs données ici le sont à titre indicatif, et dépendent du dispositif utilisé. Le partitionnement doit notamment être déterminé en fonction des caractéristiques de la distribution spatiale de l'intensité lumineuse de la seconde source lumineuse 2. Le terme $\omega_x$ intervenant dans le calcul du paramètre de réflexion $\beta$ décrit plus haut prend alors les valeurs de poids : 100, 50, 25, 12 par exemple. Le partitionnement permet de simplifier les calculs et surtout d'éviter d'avoir des mesures de paramètres de réflexion très bruitées, mais il serait également possible de garder des valeurs de la distribution sans partitionnement.

La zone d'intérêt de l'image correspond à la zone susceptible de contenir les informations sur l'objet analysé. En effet, l'objet n'est pas représenté sur la totalité de l'image, et il est intéressant de ne prendre en compte qu'une partie seulement de l'image, celle où apparait l'objet.

La zone d'intérêt est choisie pour correspondre à la zone de l'image correspondant à l'objet dont on souhaite valider qu'il s'agit d'un authentique élément du corps humain. On peut par exemple délimiter la zone d'intérêt en détectant le contour de la zone de l'image correspondant à la partie l'objet, notamment par la mise en œuvre d'un algorithme classique de détection de contours tel que le filtre de Canny ou de Deriche.

Comme indiqué plus haut, le dispositif de validation doit être calibré lors de sa mise en service, notamment en ce qui concerne le réglage de la puissance de la seconde source lumineuse 2. Il est possible d'utiliser un paramétrage déterminé par calcul. Cependant, dans la mesure où beaucoup de paramètres rentrent en jeu, tels que la position de la seconde source lumineuse 2, les longueurs d'onde utilisées ou encore la configuration du support 7, il est préférable de mettre en œuvre un procédé de calibrage du dispositif de validation comprenant au moins les étapes suivantes, pour chacun des éléments du corps humain authentiques d'une base d'apprentissage, en référence à la figure 3 :

- illumination (étape S20) de l'élément du corps humain authentique par la première source lumineuse 1,
- détermination d'un temps d'exposition (étape S21) correspondant au temps nécessaire pour que le niveau moyen d'exposition à la lumière du capteur d'image 3 atteigne une valeur prédéterminée, la puissance lumineuse de la première source lumineuse 1 étant choisie pour faire apparaître le réseau veineux à l'intérieur de l'élément du corps humain authentique sur une image acquise par le capteur d'image,
- de façon itérative jusqu'à et tant que tant que la différence entre la première composante de couleur et la seconde composante de couleur dans une zone d'intérêt de l'image correspondant à l'élément du corps humain authentique est inférieure à un seuil d'équilibre :

  • une illumination (étape S22) simultanée de l'élément du corps humain par la première source lumineuse 1 et par la seconde source lumineuse 2 pendant ledit temps d'exposition,
  • une acquisition d'une image (étape S23) par le capteur d'image 3,
  • une augmentation (étape S24) de la puissance de la seconde source lumineuse 2,

- la puissance lumineuse de la seconde source lumineuse étant choisie de sorte à être statiquement représentative des puissances associées à chacun des éléments du corps humain authentiques de la base d'apprentissage.

L'apparition du réseau veineux correspond notamment à ce que sur l'image acquise, les plus gros vaisseaux sanguins sous-cutanés situés à une profondeur comprise entre 1 à 2 mm puissent être distingués grâce à un contraste suffisamment prononcé par rapport à leur environnement (quelques points pour un codage 8 bits).

Il est à noter que la détermination du temps d'exposition, effectué sous l'éclairage de la seule première source lumineuse 1 comme dans le procédé exposé plus haut, dispense d'un réglage de la puissance de ladite première source lumineuse 1. La calibration de la puissance de la seconde source lumineuse 2 se fait par apprentissage sur une population d'éléments du corps humain authentiques (doigts vivants dans notre cas) représentatifs. La puissance lumineuse de la seconde source lumineuse est ensuite choisie de sorte à être statiquement représentative des puissances associées à chacun des éléments du corps humain authentiques de la base d'apprentissage. Par exemple, une puissance médiane de la seconde source lumineuse 2 peut en être déduite et reste fixe.

La prédominance de la réflexion de la lumière issue de la seconde source lumineuse 2 par rapport à la diffusion de la lumière issue de la première source lumineuse 1, utilisée dans le traitement de validation de l'objet présenté, dépend entre autres de la quantité de lumière de la seconde source lumineuse 2 intégrée par le capteur d'images pendant un temps d'exposition dont le réglage est présenté ci-dessus. De fait, si l'illumination par la seconde source lumineuse 2 est trop faible, alors le phénomène de diffusion sera toujours prépondérant, et il sera alors difficile de distinguer un leurre.

Par conséquent, la puissance de la seconde source lumineuse 2 est réglée de sorte à atteindre un équilibre statistique entre les valeurs de la seconde composante des pixels et les valeurs de la première composante desdits pixels dans la zone d'intérêt de l'image, pour un élément du corps humain authentique. La première composante de couleur et la seconde composante de couleur sont statistiquement équilibrées pour un élément authentique du corps humain lorsque la différence entre la première composante de couleur et la seconde composante de couleur dans une zone d'une image correspondant audit élément du corps humain authentique est inférieure à un seuil.

Dans le cas d'images 8 bits avec un codage de 0 à 255, ce seuil peut par exemple correspondre à une différence de 10 entre la première composante de couleur et la seconde composante de couleur, de préférence de 5, et de préférence encore de 3.

La puissance de la seconde source lumineuse 2 utilisée pour le procédé de validation est ensuite déterminée à partir de la puissance adéquate enregistrée pour chacun des éléments du corps humain authentiques de la base d'apprentissage, afin d'être statistiquement représentative des puissances associées à chacun des éléments du corps humain authentiques de la base d'apprentissage. Par exemple, il peut s'agir de la puissance médiane de celles-ci.

Dans le cas de l'utilisation de deux secondes sources lumineuses 2 différentes, par exemple une verte (longueur d'onde comprise entre 500 et 550 nm) et une bleue (longueur d'onde comprise entre 435 et 500 nm), un paramètre de réflexion est associé à chacune des secondes sources lumineuses. Il y a donc par exemple un paramètre de réflexion prenant en compte les valeurs de la composante verte par rapport aux valeurs de la première composante et un paramètre de réflexion prenant en compte les valeurs de la composante bleue par rapport aux valeurs de la première composante. Ainsi, deux mesures sont obtenues et peuvent être fusionnées, avec par exemple l'application d'un seuil pour le paramètre de réflexion de la lumière verte, l'application d'un seuil pour le paramètre de réflexion de la lumière bleue, puis une fusion des décisions obtenues, par exemple avec un « et » logique ou un « ou » logique.

De même, la calibration est effectuée pour chacune desdites secondes sources lumineuses 2.

**Revendications**

1. Procédé pour la validation de ce qu'un objet est un élément (5) du corps humain comprenant au moins les étapes suivantes :

    - illumination (S12), par au moins une première source lumineuse (1) émettant dans une première plage de longueurs d'onde dans l'infrarouge et par au moins une seconde source lumineuse (2) émettant dans une seconde plage de longueurs d'onde dans le spectre visible, d'un objet dont on souhaite valider qu'il correspond à un élément de corps humain, ladite seconde source lumineuse (2) émettant de la lumière à des longueurs d'onde inférieures à celles de la première source ;

    - acquisition (S13) d'une image par un capteur d'image (3) sensible à une gamme de longueur d'onde recouvrant au moins en partie la première plage de longueurs d'onde dans l'infrarouge et la seconde plage de longueur d'onde dans le spectre visible, les pixels de ladite image étant associés à au moins deux valeurs caractéristiques respectivement d'une première composante de couleur et d'une seconde composante de couleur, ladite seconde composante correspondant à au moins une longueur d'onde de la seconde plage de longueur d'onde émise par la seconde source lumineuse (2), les puissances lumineuses d'illumination respectives de la première source lumineuse et de la seconde source lumineuse étant préalablement calibrées pour que la première composante de couleur et la seconde composante de couleur soient statistiquement équilibrées pour un élément du corps humain authentique, la première composante de couleur et la seconde composante de couleur étant statistiquement équilibrées pour un élément authentique du corps humain lorsque la différence entre la première composante de couleur et la seconde composante de couleur dans une zone d'une image correspondant audit élément du corps humain authentique est inférieure à un seuil ;

    - mise en œuvre (S14) d'un traitement de validation fonction de comparaisons entre les valeurs de la seconde composante de couleur des pixels d'une zone d'intérêt de l'image et les valeurs de la première composante de couleur desdits pixels d'une zone d'intérêt de l'image, afin de permettre de valider que l'objet correspond à un élément du corps humain, les valeurs de la première composante de couleur et les valeurs de la seconde composante de couleur étant statistiquement équilibrées pour un élément du corps humain authentique ;

    - validation ou non de l'authenticité (S15) de l'objet (5) en fonction du résultat du traitement de validation.

2. Procédé selon la revendication 1, dans lequel la première source lumineuse (1) émet de la lumière incidente à l'objet hors du champ d'acquisition du capteur d'image (3), et la seconde source lumineuse (2)

émet de la lumière incidente à l'objet dans le champ d'acquisition du capteur d'image (3).

**3.** Procédé selon l'une des revendications précédentes, dans lequel, un premier polarisateur est disposé sur le trajet lumineux entre la première source lumineuse (1) et l'objet, ledit premier polarisateur étant un polariseur rectiligne avec un axe de polarisation dans une première direction, et un second polarisateur est disposé au niveau du capteur d'image (3), ledit second polarisateur étant un polariseur rectiligne avec un axe de polarisation dans une seconde direction orthogonale à la première direction, la première source lumineuse (1) illuminant l'objet par de la lumière polarisée dans la première direction et la seconde source lumineuse (2) illuminant l'objet par de la lumière non polarisée dans la première direction.

**4.** Procédé selon l'une des revendications précédentes, dans lequel la première source lumineuse (1) émet dans des longueurs d'onde entre 780 nm et 900 nm, et la seconde source lumineuse (2) émet dans des longueurs d'onde entre 435 nm et 550 nm.

**5.** Procédé selon l'une des revendications précédentes, dans lequel le temps d'exposition pendant lequel est illuminé l'objet est préalablement déterminé par une étape (S11) au cours de laquelle l'objet (5) est illuminé (S10) seulement par la première source lumineuse (1) à une puissance déterminée, ledit temps d'exposition correspondant au temps nécessaire pour que le niveau moyen d'exposition du capteur d'image (3) à la lumière atteigne une valeur prédéterminée.

**6.** Procédé selon la revendication précédente, dans lequel le traitement de validation est également fonction du temps d'exposition, un temps d'exposition s'écartant d'une plage d'acceptabilité signifiant que l'objet présenté n'est pas un doigt authentique.

**7.** Procédé selon l'une des revendications 1 à 4, dans lequel la puissance de la première source lumineuse est préalablement déterminé par une étape au cours de laquelle l'objet (5) est illuminé seulement par la première source lumineuse (1) pendant un temps d'exposition déterminé, ladite puissance correspondant à la puissance nécessaire pour que le niveau moyen d'exposition du capteur d'image (3) à la lumière atteigne une valeur prédéterminée.

**8.** Procédé selon la revendication précédente, dans lequel le traitement de validation est également fonction de la puissance de la première source lumineuse ainsi déterminée, une puissance de la première source lumineuse s'écartant d'une plage d'acceptabilité signifiant que l'objet présenté n'est pas un doigt authentique.

**9.** Procédé selon l'une des revendications précédentes, dans lequel le traitement de validation comprend le calcul d'un paramètre de réflexion qui est fonction de la somme des valeurs de la seconde composante de couleur des pixels de la zone d'intérêt dont la première composante de couleur est inférieure d'une valeur prédéterminée à la valeur de la seconde composante de couleur.

**10.** Procédé selon la revendication précédente, dans lequel ladite somme est pondérée par l'inverse de poids fonctions de la distribution spatiale prédéterminée de l'intensité lumineuse de la seconde source lumineuse (2).

**11.** Procédé selon la revendication précédente, dans lequel le paramètre de réflexion $\beta$ est déterminé selon la formule suivante :

$$\beta = \frac{1}{N_{ROI}} \sum_{x \in ROI} \frac{x_v . H(x_v - (x_r + \varepsilon))}{\omega_x}$$

avec H la fonction de Heaviside, $N_{ROI}$ le nombre total de pixels x de la zone d'intérêt ROI, $x_r$ la valeur de la première composante de couleur du pixel x, $x_v$ la valeur de la seconde composante de couleur du pixel x, $\varepsilon$ une constante de seuil, et $\omega_x$ un poids prédéterminé fonction de l'intensité lumineuse de la seconde source lumineuse (2) pour le pixel x.

**12.** Dispositif de validation configuré pour mettre en œuvre un procédé de validation selon l'une quelconque des revendications 1 à 11, ledit dispositif de validation comprenant

    - au moins une première source lumineuse (1) configurée pour émettre en direction de l'objet (5) de la lumière dans une première plage de longueur d'onde dans l'infrarouge ;
    - au moins une seconde source lumineuse (2) configurée pour émettre en direction de l'objet (5) de la lumière dans une seconde plage de longueur d'onde dans le spectre visible à des longueurs d'onde inférieures à celles de la première source lumineuse (1), les puissances lumineuses d'illumination respectives de la première source lumineuse et de la seconde source lumineuse étant préalablement calibrées pour que la première composante de couleur et la seconde composante de couleur soient statistiquement équilibrées pour un élément du corps humain authentique, la première composante de couleur et la seconde composante de couleur étant statistiquement équilibrées pour un élément authentique du corps humain lorsque la différence entre la première composante de couleur et la seconde composante de couleur dans une zone d'une image correspondant audit élément du corps humain authentique est inférieure à un seuil ;

- un capteur d'image (3) sensible à une gamme de longueur d'onde recouvrant au moins en partie la première plage de longueurs d'onde dans l'infrarouge et la seconde plage de longueur d'onde dans le spectre visible, configuré pour acquérir une image de l'objet (5) dont les pixels sont associés à au moins deux valeurs caractéristiques respectivement d'une première composante de couleur et d'une seconde composante de couleur, ladite seconde composante correspondant à au moins une longueur d'onde du spectre visible émise par la seconde source lumineuse (2),

- une unité de traitement (4) configurée pour mettre en œuvre un traitement de validation fonction de comparaisons entre les valeurs de la seconde composante de couleur des pixels et les valeurs de la première composante de couleur dans une zone d'intérêt de l'image, afin de permettre de valider que l'objet correspond à un élément du corps humain, les valeurs de la première composante de couleur et les valeurs de la seconde composante de couleur étant statistiquement équilibrées pour un élément du corps humain authentique.

13. Procédé de calibrage d'un dispositif de validation selon la revendication précédente, ledit procédé de calibrage comprenant au moins les étapes suivantes, pour chacun des éléments du corps humain authentiques d'une base d'apprentissage :

- illumination de l'élément du corps humain authentique par la première source lumineuse (1),

- détermination d'un temps d'exposition correspondant au temps nécessaire pour que le niveau moyen d'exposition à la lumière du capteur d'image (3) atteigne une valeur prédéterminée, la puissance lumineuse de la première source lumineuse (1) étant choisie pour faire apparaître le réseau veineux à l'intérieur de l'élément du corps humain authentique sur une image acquise par le capteur d'image,

- de façon itérative jusqu'à et tant que la différence entre la première composante de couleur et la seconde composante de couleur dans une zone d'intérêt de l'image correspondant à l'élément du corps humain authentique est inférieure à un seuil d'équilibre :

    • une illumination simultanée de l'élément du corps humain par la première source lumineuse (1) et par la seconde source lumineuse (2) pendant ledit temps d'exposition,
• une acquisition d'une image (S23) par le capteur d'image (3),
• une augmentation (S24) de la puissance de la seconde source lumineuse (2),

- la puissance lumineuse de la seconde source lumineuse étant choisie de sorte à être statiquement représentative des puissances associées à chacun des éléments du corps humain authentiques de la base d'apprentissage.

14. Produit programme d'ordinateur comprenant des instructions qui conduisent le dispositif selon la revendication 12 à exécuter les étapes du procédé selon l'une quelconque des revendications 1 à 11.

## Patentansprüche

1. Verfahren zum Validieren, dass ein Objekt ein Element (5) des menschlichen Körpers ist, umfassend mindestens die folgenden Schritte:

- Beleuchten (S12) durch mindestens eine erste Lichtquelle (1), die in einem ersten Wellenlängenbereich

im Infrarotbereich emittiert, und durch mindestens eine zweite Lichtquelle (2), die in einem zweiten Wellenlängenbereich im sichtbaren Spektrum eines Objekts emittiert, bei dem validiert werden soll, dass es einem Element des menschlichen Körpers entspricht, wobei die zweite Lichtquelle (2) Licht bei Wellenlängen emittiert, die kürzer sind als die der ersten Lichtquelle;

- Erfassen (S13) eines Bildes durch einen Bildsensor (3), der für einen Wellenlängenbereich empfindlich ist, der zumindest teilweise den ersten Wellenlängenbereich im Infrarotbereich und den zweiten Wellenlängenbereich im sichtbaren Spektrum abdeckt, wobei die Pixel des Bildes mindestens zwei charakteristischen Werten jeweils einer ersten Farbkomponente und einer zweiten Farbkomponente zugeordnet sind, wobei die zweite Komponente mindestens einer Wellenlänge des zweiten Wellenlängenbereichs entspricht, die von der zweiten Lichtquelle (2) emittiert wird, wobei die jeweiligen Lichtleistungen der Beleuchtung der ersten Lichtquelle und der zweiten Lichtquelle zuvor kalibriert wurden, damit die erste Farbkomponente und die zweite Farbkomponente für ein authentisches Element des menschlichen Körpers statistisch ausgewogen sind, wobei die erste Farbkomponente und die zweite Farbkomponente für ein authentisches Element des menschlichen Körpers statistisch ausgewogen sind, wenn die Differenz zwischen der ersten Farbkomponente und der zweiten Farbkomponente in einem Bereich eines Bildes, der dem authentischen Element des menschlichen Körpers entspricht, kleiner als ein Schwellenwert ist;

- Durchführen (S14) einer Validierungsverarbeitung, die von Vergleichen zwischen den Werten der zweiten Farbkomponente der Pixel eines Bildbereichs von Interesse und den Werten der ersten Farbkomponente der Pixel eines Bildbereichs von Interesse abhängt, zum Ermöglichen des Validierens, dass das Objekt einem Element des menschlichen Körpers entspricht, wobei die Werte der ersten Farbkomponente und die Werte der zweiten Farbkomponente für ein authentisches Element des menschlichen Körpers statistisch ausgewogen sind;

- Validieren oder Nicht-Validieren der Authentizität (S15) des Objekts (5) in Abhängigkeit von dem Ergebnis der Validierungsverarbeitung.

2. Verfahren nach Anspruch 1, wobei die erste Lichtquelle (1) Licht emittiert, das außerhalb des Erfassungsbereichs des Bildsensors (3) auf das Objekt fällt, und die zweite Lichtquelle (2) Licht emittiert, das innerhalb des Erfassungsbereichs des Bildsensors (3) auf das Objekt fällt.

3. Verfahren nach einem der vorstehenden Ansprüche, wobei ein erster Polarisator im Lichtweg zwischen der ersten Lichtquelle (1) und dem Objekt angeordnet ist, wobei der erste Polarisator ein geradliniger Polarisator mit einer Polarisationsachse in einer ersten Richtung ist, und ein zweiter Polarisator am Bildsensor (3) angeordnet ist, wobei der zweite Polarisator ein geradliniger Polarisator mit einer Polarisationsachse in einer zweiten Richtung orthogonal zur ersten Richtung ist, wobei die erste Lichtquelle (1) das Objekt mit polarisiertem Licht in der ersten Richtung beleuchtet und die zweite Lichtquelle (2) das Objekt mit unpolarisiertem Licht in der ersten Richtung beleuchtet.

4. Verfahren nach einem der vorstehenden Ansprüche, wobei die erste Lichtquelle (1) in Wellenlängen zwischen 780 nm und 900 nm emittiert und die zweite Lichtquelle (2) in Wellenlängen zwischen 435 nm und 550 nm emittiert.

5. Verfahren nach einem der vorstehenden Ansprüche, wobei die Expositionszeit, während der das Objekt beleuchtet wird, zuvor durch einen Schritt (S11) bestimmt wird, bei dem das Objekt (5) nur von der ersten Lichtquelle (1) mit einer bestimmten Leistung beleuchtet wird (S10), wobei die Expositionszeit der Zeit entspricht, die erforderlich ist, damit der durchschnittliche Expositionspegel des Bildsensors (3) gegenüber dem Licht einen vorbestimmten Wert erreicht.

6. Verfahren nach dem vorstehenden Anspruch, wobei die Validierungsverarbeitung auch von der Expositionszeit abhängt, wobei eine von einem Akzeptanzbereich abweichende Expositionszeit bedeutet, dass das dargestellte Objekt kein authentischer Finger ist.

7. Verfahren nach einem der Ansprüche 1 bis 4, wobei die Leistung der ersten Lichtquelle zuvor durch einen Schritt bestimmt wird, bei dem das Objekt (5) während einer bestimmten Expositionszeit nur von der ersten Lichtquelle (1) beleuchtet wird, wobei die Leistung der Leistung entspricht, die erforderlich ist, damit der durchschnittliche Expositionspegel des Bildsensors (3) gegenüber dem Licht einen vorbestimmten Wert erreicht.

8. Verfahren nach dem vorstehenden Anspruch, wobei die Validierungsverarbeitung auch von der so bestimmten Leistung der ersten Lichtquelle abhängt, wobei eine von einem Akzeptanzbereich abweichende Leistung der ersten Lichtquelle bedeutet, dass das dargestellte Objekt kein authentischer Finger ist.

9. Verfahren nach einem der vorstehenden Ansprüche, wobei die Validierungsverarbeitung das Berechnen eines Reflexionsparameters umfasst, der von der Summe der Werte der zweiten Farbkomponente der Pixel des Bereichs von Interesse abhängt, dessen erste Farbkomponente um einen vorbestimmten Wert kleiner ist als der Wert der zweiten Farbkomponente.

10. Verfahren nach dem vorstehenden Anspruch, wobei die Summe mit dem Kehrwert von Gewichtungen gewichtet wird, die von der vorbestimmten räumlichen Verteilung der Lichtintensität der zweiten Lichtquelle (2) abhängen.

11. Verfahren nach dem vorstehenden Anspruch, wobei der Reflexionsparameter $\beta$ gemäß der folgenden Formel bestimmt wird:

$$\beta = \frac{1}{N_{ROI}} \sum_{x \in ROI} \frac{x_v . H(x_v - (x_r + \varepsilon))}{\omega_x}$$

wobei H die Heaviside-Funktion, $N_{ROI}$ die Gesamtzahl der Pixel x des Bereichs von Interesse ROI, $x_r$

der Wert der ersten Farbkomponente des Pixels x, $x_v$ der Wert der zweiten Farbkomponente des Pixels x, $\varepsilon$ eine Schwellenwertkonstante und $\omega_x$ eine vorbestimmte Gewichtung ist, die von der Lichtintensität der zweiten Lichtquelle (2) für das Pixel x abhängt.

12. Validierungsvorrichtung, die konfiguriert ist, um ein Validierungsverfahren nach einem der Ansprüche 1 bis 11 durchzuführen, wobei die Validierungsvorrichtung umfasst

- mindestens eine erste Lichtquelle (1), die konfiguriert ist, um Licht in einem ersten Wellenlängenbereich im Infrarotbereich in Richtung des Objekts (5) zu emittieren;
- mindestens eine zweite Lichtquelle (2), die konfiguriert ist, um Licht in einem zweiten Wellenlängenbereich im sichtbaren Spektrum bei Wellenlängen, die kürzer als die der ersten Lichtquelle (1) sind, in Richtung des Objekts (5) zu emittieren, wobei die jeweiligen Lichtleistungen der Beleuchtung der ersten Lichtquelle und der zweiten Lichtquelle zuvor kalibriert wurden, damit die erste Farbkomponente und die zweite Farbkomponente für ein authentisches Element des menschlichen Körpers statistisch ausgewogen sind, wobei die erste Farbkomponente und die zweite Farbkomponente für ein authentisches Element des menschlichen Körpers statistisch ausgewogen sind, wenn die Differenz zwischen der ersten Farbkomponente und der zweiten Farbkomponente in einem Bereich eines Bildes, der dem authentischen Element des menschlichen Körpers entspricht, kleiner als ein Schwellenwert ist;
- einen Bildsensor (3), der für einen Wellenlängenbereich empfindlich ist, der zumindest teilweise den ersten Wellenlängenbereich im Infrarotbereich und den zweiten Wellenlängenbereich im sichtbaren Spektrum abdeckt, der konfiguriert ist, um ein Bild des Objekts (5) zu erfassen, dessen Pixel mindestens zwei charakteristischen Werten jeweils einer ersten Farbkomponente und einer zweiten Farbkomponente zugeordnet sind, wobei die zweite Komponente mindestens einer Wellenlänge des sichtbaren Spektrums entspricht, die von der zweiten Lichtquelle (2) emittiert wird,
- eine Verarbeitungseinheit (4), die konfiguriert ist, um eine Validierungsverarbeitung durchzuführen, die von Vergleichen zwischen den Werten der zweiten Farbkomponente der Pixel und den Werten der ersten Farbkomponente in einem Bildbereich von Interesse abhängt, zum Ermöglichen des Validierens, dass das Objekt einem Element des menschlichen Körpers entspricht, wobei die Werte der ersten Farbkomponente und die Werte der zweiten Farbkomponente für ein authentisches Element des menschlichen Körpers statistisch ausgewogen sind.

13. Verfahren zur Kalibrierung einer Validierungsvorrichtung nach dem vorstehenden Anspruch, wobei das Kalibrierungsverfahren für jedes der authentischen Elemente des menschlichen Körpers einer Lernbasis mindestens die folgenden Schritte umfasst:

- Beleuchten des authentischen Elements des menschlichen Körpers durch die erste Lichtquelle (1),
- Bestimmen einer Expositionszeit, die der Zeit entspricht, die erforderlich ist, damit der durchschnittliche Expositionspegel des Bildsensors (3) gegenüber dem Licht einen vorbestimmten Wert erreicht, wobei die Lichtleistung der ersten Lichtquelle (1) so gewählt wird, dass das Venennetz innerhalb des authentischen Elements des menschlichen Körpers auf einem von dem Bildsensor erfassten Bild sichtbar wird,
- iterativ bis und solange die Differenz zwischen der ersten Farbkomponente und der zweiten Farbkomponente in einem Bildbereich von Interesse, der dem authentischen Element des menschlichen Körpers entspricht, kleiner als ein Ausgewogenheitsschwellenwert ist:

• gleichzeitiges Beleuchten des Elements des menschlichen Körpers durch die erste Lichtquelle (1) und durch die zweite Lichtquelle (2) während der genannten Expositionszeit,
• Erfassen eines Bildes (S23) durch den Bildsensor (3),
• Erhöhen (S24) der Leistung der zweiten Lichtquelle (2),

- wobei die Lichtleistung der zweiten Lichtquelle so gewählt wird, dass sie statisch repräsentativ für die Leistungen ist, die jedem der authentischen Elemente des menschlichen Körpers der Lernbasis zugeordnet sind.

14. Computerprogrammprodukt, umfassend Anweisungen, welche die Vorrichtung nach Anspruch 12 veranlassen, die Schritte des Verfahrens nach einem der Ansprüche 1 bis 11 auszuführen.

**Claims**

1. A method for validating that an object is an element (5) of the human body, comprising at least the following steps:

- illuminating (S12), by at least a first light source (1) emitting in a first range of wavelengths

in the infrared, and by at least a second light source (2) emitting in a second range of wavelengths
in the visible spectrum, an object for which it is desired to validate that it corresponds to a human body element, said second light source (2) emitting light at wavelengths lower than those of the first source;

- acquiring (S13) an image by an image sensor (3) sensitive to a wavelength range covering at least in part the first range of wavelengths in the infrared and the second wavelength range in the visible spectrum, the pixels of said image being associated with at least two characteristic values respectively of a first color component and of a second color component, said second component corresponding to at least one wavelength of the second wavelength range emitted by the second light source (2), the respective illumination light powers of the first light source and of the second light source being previously calibrated so that the first color component and the second color component are statistically balanced for an element of the authentic human body, the first color component and the second color component being statistically balanced for an authentic element of the human body when the difference between the first color component and the second color component in an area of an image corresponding to said element of the authentic human body is lower than a threshold;
- implementing (S14) a validation processing based on comparisons between the values of the second color component of the pixels of an area of interest of the image and the values of the first color component of said pixels of an area of interest of the image, in order to make it possible to validate that the object corresponds to an element of the human body, the values of the first color component and the values of the second color component being statistically balanced for an element of the authentic human body;
- validating or not the authenticity (S15) of the object (5) based on the result of the validation processing.

2. The method according to claim 1, wherein the first light source (1) emits incident light to the object outside the field of acquisition of the image sensor (3), and the second light source (2) emits incident light to the object within the field of acquisition of the image sensor (3).

3. The method according to one of the preceding claims, wherein, a first polarizer is positioned on the light path between the first light source (1) and the object, said first polarizer being a rectilinear polarizer with a polarization axis in a first direction, and a second polarizer is positioned at the image sensor (3), said second polarizer being a rectilinear polarizer with a polarization axis in a second direction orthogonal to the first direction, the first light source (1) illuminating the object by polarized light in the first direction and the second light source (2) illuminating the object by non-polarized light in the first direction.

4. The method according to one of the preceding claims, wherein the first light source (1) emits in wavelengths between 780 nm and 900 nm, and the second light source (2) emits in wavelengths between 435 nm and 550 nm.

5. The method according to one of the preceding claims, wherein the exposure time during which the object is illuminated is previously determined by a step (S11) during which the object (5) is illuminated (S10) solely by the first light source (1) at a specific power, said exposure time corresponding to the time necessary for the average level of exposure of the image sensor (3) to the light to reach a predetermined value.

6. The method according to the preceding claim, wherein the validation processing is also based on the exposure time, an exposure time deviating from an acceptability range indicating that the presented object is not an authentic finger.

7. The method according to one of claims 1 to 4, wherein the power of the first light source is previously determined by a step during which the object (5) is illuminated solely by the first light source (1) during a specific exposure time, said power corresponding to the power necessary for the average level of exposure of the image sensor (3) to the light to reach a predetermined value.

8. The method according to the preceding claim, wherein the validation processing is also a function of the power of the first light source thus determined, a power of the first light source deviating from a range of acceptability indicating that the presented object is not an authentic finger.

9. The method according to one of the preceding claims, wherein the validation processing comprises the calculation of a reflection parameter which is a function of the sum of the values of the second color component of the pixels of the area of interest, the first color component whereof is lower by a predetermined value than the value of the second color component.

10. The method according to the preceding claim, wherein said sum is weighted by the inverse weight functions of the predetermined spatial distribution of the light intensity of the second light source (2).

11. The method according to the preceding claim, wherein the reflection parameter $\beta$ is determined according to the following formula:

$$\beta = \frac{1}{N_{ROI}} \sum_{x \in ROI} \frac{x_v . H(x_v - (x_r + \varepsilon))}{\omega_x}$$

where H is the Heaviside function, $N_{ROI}$ the total number of pixels x of the area of interest ROI, $x_r$ the value of the first color component of the pixel x, $x_v$ the value of the second color component of the pixel x, $\varepsilon$ a threshold constant, and $\omega_x$ a predetermined weight based on the light intensity of the second light source (2) for the pixel x.

12. A validation device configured to implement a validation method according to any one of claims 1 to 11, said validation device comprising

- at least a first light source (1) configured to emit towards the object (5) light in a first wavelength range in the infrared;
- at least a second light source (2) configured to emit towards the object (5) light in a second wavelength in the visible spectrum at wavelengths lower than those of the first light source (1), the respective illumination light powers of the first light source and of the second light source being previously calibrated so that the first color component and the second color component are statistically balanced for an element of the authentic human body, the first color component and the second color component being statistically balanced for an authentic element of the human body when the difference between the first color component and the second color component in an area of an image corresponding to said element of the authentic human body is lower than a threshold;
- an image sensor (3) sensitive to a wavelength range covering at least in part the first wavelength range in the infrared and the second wavelength range in the visible spectrum, configured to acquire an image of the object (5) the pixels whereof are associated with at least two characteristic values respectively of a first color component and of a second color component, said second component corresponding to at least one wavelength of the visible spectrum emitted by the second light source (2),
- a processing unit (4) configured to implement a validation processing based on comparisons between the values of the second color component of the pixels and the values of the first color component in an area of interest of the image, in order to make it possible to validate that the object corresponds to an element of the human body, the values of the first color component and the values of the second color component being statistically balanced for an element of the authentic human body.

13. The method of calibrating a validation device according to the preceding claim, said calibration method comprising at least the following steps, for each of the authentic elements of the human body of a training base:

- illuminating the element of the authentic human body by the first light source (1),
- determining an exposure time corresponding to the time necessary for the average level of exposure to the light of the image sensor (3) to reach a predetermined value, the light power of the first light source (1) being chosen to reveal the venous network inside the element of the authentic human body on an image acquired by the image sensor,
- iteratively until and as long as the difference between the first color component and the second color component in an area of interest of the image corresponding to the element of the authentic human body is less than a balance threshold:

 • simultaneously illuminating the element of the human body by the first light source (1) and by the second light source (2) during said exposure time,
 • acquiring an image (S23) by the image sensor (3),
 • increasing (S24) the power of the second light source (2),

- the light power of the second light source being chosen so as to be statistically representative of the powers associated with each of the authentic elements of the human body of the training base.

14. A computer program product comprising instructions that cause the device according to claim 12 to execute the steps of the method according to any one of claims 1 to 11.

# FIG 1

# FIG 2

Illumination par la première source

S10

Détermination du temps d'exposition

S11

Illumination par la première et la
seconde source

S12

Acquisition d'une image

S13

Traitement de validation

S14

Validation ou non

S15

# FIG 3

S20 — | Illumination par la première source |

S21 — | Détermination du temps d'exposition |

S22 — | Illumination par la première et la seconde source |

S23 — | Acquisition d'une image |

S24 — | Réglage de la puissance |

# FIG 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110129128 A1
- EP 2328111 A1
- US 2005205667 A1